# EUROPÄISCHE PATENTANMELDUNG

(11) **EP 0 792 856 A2**
(43) Veröffentlichungstag der Anmeldung: **03.09.1997**
(21) Anmeldenummer: 97102410.4
(22) Anmeldetag: 14.02.1997
(51) Int. Cl.: C05F 17/00, C05F 17/02

(54) **Verfahren und Vorrichtung zur Verrottung von Abfällen**

(30) Priorität: 27.02.1996 DE 19607308
(71) Anmelder: MESSER GRIESHEIM GMBH, D-60547 Frankfurt (DE)
(72) Erfinder: Böckler, Thomas, 47807 Krefeld (DE); Beutler, Hans-Josef, 47669 Wachtendonk (DE)

(57) **Zusammenfassung**

Bei der Verrottung von Abfällen wird in Rottehaufen oder Rottetürme, welche mit Abfall beschickt werden, Luft eingetragen.
Um die Effektivität der Verrottung zu steigern sowie ein für die Vetrottung gleichmäßigeres Temperaturprofil in dem zu verottenden Abfall zu erzeugen wird erfindungsgemäß mit Sauerstoff angereicher-tes Gas in den Abfall eingeleitet. Hierdurch kann eine optimale Rotte-temperatur eingestellt werden. Die Rottezeit wird verkürzt und es ent-steht ein emissionsfreieres Endlagerungsproduckt, das einer Deponie zugeführt werden kann.

## Beschreibung

Die Erfindung betrifft ein Verfahren zur Verrottung Von Abfällen nach dem Oberbegriff des Anspruchs 1 sowie eine für die Durchführung des Verfahrens geeignete Vorrichtung.

Der für die Entsorgung aufkommende Müll enthält vielfältige Bestandteile, wie Monoabfälle, Abfallgemische, Klärschlamm und Restmüll. Dieser Abfall wird nach dem Stand der Technik einem Rotteprozeß unterzogen. Hiebei wird der Abfall in offenen oder geschlossenen Systemen, wie Containern, Rotteboxen, Rottetürmen oder einer Trommelkompostierung einem Rotteprozeß unterzogen. In diesen Prozessen wird zur Verbesserung des Rotteprozeßes Luft mittels eines Gebläses über eine Leitung oder Rinne in den Abfall eingetragen.
Aus der DE-PS 41 07 340 ist ein Verfahren bekannt, bei dem ein geschlossener Kompostierbehälter für organische Abfälle mit Sauerstoff versorgt wird. Hierbei wird das zur Kompostierung eingesetzte Gas, dem der Sauerstoff zugeführt wird, im Kreislauf geführt. Entstandenes CO₂ wird dabei in einer zwischengeschalteten Stufe abgetrennt.

Bei dem eingangs genannten Verfahren ist die Rottezeit verhältnismäßig lang, so daß bei Anfall von großen Mengen an zu verrottendem Material Kapazitätsengpässe entstehen. Geruchsemissionen können nur mit erheblichem technischen Aufwand unterbunden werden. Die Rottetemperatur ist oftmals inhomogen und erfordert häufiges Umsetzen des Materials.

Das Verfahren der DE-PS 41 07 340 ist nur für kleine Mengen biologisch leicht abbaubaren Materials im Sinne der Kompostierung von Grünschnitt bekannt, weil angenommen wurde, daß andere Materialien nicht durch Kompostierung für eine Endlagerung in einer Deponie aufgearbeitet werden können.

Der Erfindung liegt daher die Aufgabe zugrunde ein Verfahren und eine Vorrichtung zu schaffen, mit denen der Verrottungsprozeß von Abfällen optimiert werden kann. Geruchsemission soll dabei verhindert und die Rottezeit verkürzt werden.

Ausgehend vom Oberbegriff des Anspruchs 1 ist die Aufgabe erfindungsgemäß gelöst mit den im kennzeichnenden Teil des Anspruchs 1 angegebenen Merkmalen.

Mit dem erfindungsgemäßen Verfahren und der Vorrichtung ist es überraschenderweise möglich, eine für die Verrottung des Restmülls günstigere Temperatur sowie ein gleichmäßigeres Temperaturprofil in dem Rottegut einzustellen und Geruchsbildung zu verhindern. Die Rottezeit kann wesentlich verkürzt werden.

Vorteilhalte Weiterbildungen des erfindungsgemäßen Verfahrens sind in den Unteransprüchen angegeben.

Im Folgenden soll die Erfindung an einem Beispiel erläutert werden.

Ein Gebläse, welches Umgebungsluft ansaugt, ist an eine Leitung angeschlossen, in welche reines Sauerstoffgas aus einem Sauerstoffvorratsbehälter eingespeist wird. Als Sauerstoffquelle kann auch eine on-site Anlage zur Erzeugung von O₂ aus Luft zum Einsatz kommen. Hierfür kommen beispielsweise Membrantrennanlagen oder Druckwechsel-Absorptionsanlagen in Betracht. Die Leitung wird in das Innere eines Rotteturms geführt in das die mit Sauerstoff angereicherte Luft eingetragen wird. Durch eine Meßsonde, die im Rotteturm positioniert ist, wird der aktuelle Sauerstoffgehalt im Rotteturm gemessen und die Einspeisung an Sauerstoff in die eingeleitete Luft durch eine Steuerung reguliert beziehungsweise einem Sollwert angepaßt. Es ist bei einem größeren Rotteturm möglich, die Leitung in verzweigter Form einzuführen oder mehrere Leitungen gleichzeitig zu veriegen, so daß ein möglichst gleichmäßiger Eintrag von mit Sauerstoff angereicherter Luft ermöglicht wird. Grundsätzlich kann jede beliebige Sauerstoffkonzentration in dem in den Rotteturm eingetragenen Volumenstrom eingestellt werden. Überraschenderweise führt aber schon eine Konzentration von Sauerstoff in dem Gasgemisch von 25% zu einer wesentlichen Steigerung der Rottegeschwindigkeit obwohl bei dieser Zusammensetzung nur 4% mehr Sauerstoff in dem Gas sind als in der nach dem Stand der Technik eingeleiteten Luft. Aus sicherheitstechnischen Gründen ist es weiterhin vorteilhaft, wenn die Sauerstoffkonzentration 30% nicht überschreitet. Eine Regelung der Sauerstoffzufuhr durch Messung der Sauerstoffkonzentration im Innenraum des Rotteturms wird sich daher vorzugsweise an einem solchen Konzentrationsbereich orientieren.

Mit dem erfindungsgemäßen Verfahren und der Vorrichtung ist es nunmehr möglich. Abfälle in allen offenen und geschlossenen Rotteprozessen zu verrotten ohne dabei Geruchsemissionen zu erzeugen. Beispielhaft können Prozesse in Rottehaufen, Containern oder Rotteboxen sowie der Betrieb der Trommelkompostierung genannt werden. Bei Rotteprozessen, die gegenüber der Umgebung abgeschlossen sind, kann das Gas in einem Kreisprozeß geführt werden, in welchen der Sauerstoff eingespeist wird. Als zu verarbeitender Abfall im Sinne der Erfindung kann beispielhaft verbleibender Restmüll nach der Abtrennung der Wertstoffe genannt werden. Die Kapazität von Rottebetrieben läßt sich erhöhen, so daß weniger Spitzenlastprobleme entstehen. Dementsprechend können die für den Rotteprozeß eingesetzten Vorrichtungen kleiner dimensioniert werden. Das Temperaturprofil im Rottegut verläuft gleichmäßiger und es wird eine für die Verrottung bessere Temperatur erreicht. Da die Versorgung des zu verrottenden Materials mit Sauerstoff immer gewährieistet ist, muß das Rottegut nicht gewendet werden um eine gleichmäßige Versorgung des Materials zu gewährleisten. Durch die Steuerung kann der Sauerstoffeintrag dem aktuellen Verbrauch beziehungsweise Bedarf angepaßt werden. Die biologische Aktivität wird deutlich gesteigert. In kürzerer Verrottungszeit wird ein emissionsfreieres Einlagerungsprodukt zur Deponierung hergestellt.

## Patentansprüche

1. Verfahren zur Verrottung von Abfall in einem gegenüber der Umgebung offenen oder geschlossenen Rotteprozeß bei dem zur Belüftung in den Abfall ein Sauerstoffhaltiges Gas eingeleitet wird,
dadurch gekennzeichnet,
daß das sauerstoffhaltige Gas eine höhere Konzentration an Sauerstoff aufweist als Luft.

2. Verfahren nach Anspruch 1,
dadurch gekennzeichnet,
daß das sauerstoffhaltige Gas eine Konzentration von 25 bis 30% an Sauerstoff hat.

3. Verfahren nach Anspruch 1 oder 2,
dadurch gekennzeichnet,
daß das sauerstoffhaltige Gas über mindestens eine Leitung in den Abfall eingetragen wird.

4. Verfahren nach einem der Ansprüche 1 bis 3,
dadurch gekennzeichnet,
daß die Sauerstoffkonzentration in dem Abfall gemessen und in Abhängigkeit vom Meßwert die eingeleitete Menge an Sauerstoff in den Abfall einem Sollwert angepaßt wird.

5. Verfahren nach einem der Anpsprüche 1 bis 4,
dadurch gekennzeichnet,
daß das sauerstoffhaltige Gas in einem Kreisprozeß geführt wird, in den Sauerstoff eingespeist wird.

6. Vorrichtung zur Durchführung des Verfahrens nach Anspruch 1 mit einem Gebläse und mindestens einer an das Gebläse angeschlossenen Leitung,
dadurch gekennzeichnet,
daß der Vorrichtung eine Sauerstoffquelle und Mittel zum Eintrag des Sauerstoffes in die Leitung zugeordnet sind.

7. Vorrichtung nach Anspruch 6,
dadurch gekennzeichnet,
daß die Sauerstoffquelle eine on-site- Anlage ist.

8. Vorrichtung nach Anspruch 6 oder 7,
dadurch gekennzeichnet,
daß der Vorrichtung eine Meßsonde zugeordnet ist, die die Sauerstoffkonzentration im Abfall mißt.

9. Vorrichtung nach Anspruch 8,
dadurch gekennzeichnet,
daß an die Meßsonde eine Steuerung angeschlossen ist, die die Sauerstoffzufuhr in den Abfall in Abhängigkeit von der im Abfall gemessenen Sauerstoffkonzentration reguliert.

10. Vorrichtung nach einem der Ansprüche 6 bis 9,
dadurch gekennzeichnet,
daß der Vorrichtung ein Behälter zugeordnet ist, in dem der Abfall verrottet.
